Europäisches Patentamt

European Patent Office

Office européen des brevets

(11) Publication number: **0 109 985**
**B1**

# EUROPEAN PATENT SPECIFICATION

(45) Date of publication of patent specification: **12.09.90**

(51) Int. Cl.⁵: **B 29 C 49/42**, B 29 C 49/58

(21) Application number: **82305368.1**

(22) Date of filing: **08.10.82**

(54) Blow moulding method and apparatus.

(43) Date of publication of application:
**13.06.84 Bulletin 84/24**

(45) Publication of the grant of the patent:
**12.09.90 Bulletin 90/37**

(84) Designated Contracting States:
**AT BE CH DE FR GB IT LI NL SE**

(56) References cited:
**EP-A-0 022 343
DE-A-2 611 244
FR-A-1 973 990
GB-A- 959 505
US-A-3 100 317
US-A-3 212 129
US-A-3 724 987**

(73) Proprietor: **Schmidt Moulding Limited Elgner
Castings Limited and Kovacs Mould Mfg.
Limited trading together in parnership as
SUPREME CASTING AND TOOLING 1995 Kipling
Avenue
Rexdale Ontario M9W 4J4 (CA)**

(72) Inventor: **Kovacs, Steve A.
47 Westroyal Road
Weston Ontario M9P 2C4 (CA)**

(74) Representative: **Johnson, Terence Leslie et al
Edward Evans & Co. Chancery House 53-64
Chancery Lane
London WC2A 1SD (GB)**

Courier Press, Leamington Spa, England.

## Description

This invention relates generally to the art of blow moulding hollow articles of plastic material, and is concerned in particular with an improved blow moulding method and apparatus.

Blow moulding is a well-known technique used for manufacturing hollow plastic articles such as bottles. Typically, a tube or "parison" of plastic material in a hot, mouldable condition is positioned between two halves of a partible mould having a mould cavity of a shape appropriate to the required external shape of the article to be moulded. The mould halves are closed around the parison and pressurized air is introduced into the interior of the parison to cause it to expand and conform to the shape of the mould cavity. The mould cools the plastic material to its final rigid shape and the mould is then opened and the article removed. The parison is normally extruded through a die directly into position between the mould halves; in this case, the overall process is referred to as extrusion blow moulding.

Articles such as bottles having relatively wide cylindrical body portions and narrower necks can be blow moulded relatively easily. However, difficulties are often encountered in blow moulding articles having somewhat more unusual shapes. For example, it is difficult to successfully blow mould an article which has a relatively large diameter neck and a body portion of corrugated or other unusual shape; the body portion may be of bellows-like form so as to allow for longitudinally extensibility and compressibility of the article. An example of an article of this type is a protective bellows or "boot" for an automotive rack and pinion steering system. In order to successfully mould the corrugations defining the bellows-like portion of an article of this type, a relatively small diameter parison must be used. If the parison has too large a diameter, "webs" will be formed between the corrugations and the extensibility and compressibility of the bellows-like portion of the article will be lost. On the other hand, with a relatively small diameter parison it is difficult to successfully form the neck portion of the article.

Another problem encountered in manufacturing articles such as vehicle steering boots is occasioned by the fact that the interior of the boot must be vented when the boot is to be used for a steering system which is power assisted. Such a system will normally have one boot at each side and the boots will be interconnected by a vent tube so that air displaced from one boot as it is compressed when the system is operated is displaced along the vent tube and into the other boot, which will be expanding at this time. This requires that each boot be provided with an integral port or nipple into which an end portion of the vent tube can be fitted. Typically, the nipple is required to take the form of a small tubular extension which projects outwardly from the boot adjacent its large diameter neck and which has an outer end portion closely adjacent to but spaced from the neck and extending about an axis parallel to the longitudinal axis of the boot. The passageway through the nipple must obviously communicate with the interior of the boot for venting, which means that the passageway must be angled at its inner end. In other words, the nipple has a passageway comprising an outer end portion parallel to the longitudinal axis of the bellows as a whole, and an inner end portion which is angled inwardly and which communicates with the interior of the bellows.

Manufacture of a boot having an integral nipple in this form presents significant practical difficulties. Attempts have been made to injection mould the nipples separately from the remainder of the article and then attach the nipple by heat welding. However, this requires expensive welding machinery and involves a separate manual operation. In practice, a high scrap rate was encountered in manufacturing boots by this method.

US—A—3100317 discloses a method and an apparatus of blow moulding a plastic article from a parison, according to the preambles of claims 1 and 5, the article having a hollow body portion which defines an internal space, there being a main opening and a secondary opening adjacent the main opening, both openings leading into the internal space. However this prior method does not readily permit mandrels adapted to form the respective openings to enter the parison.

An object of the present invention is therefore to seek to provide an improved blow moulding method and apparatus by which nipples and like formations may be integrally formed as part of such an article using two mandrels.

According to one aspect of the invention there is provided a method of blow moulding a plastic article having a hollow body portion which defines an internal space, and a main opening at an end of said portion communicating with said space and extending about an axis, communicating with said internal space, the method comprising the steps of:

providing a partible mould comprising mould parts which can be opened and closed and which, when closed, define a mould cavity of a shape appropriate to the required external shape of the article and extending about a longitudinal axis corresponding to said axis of the article;

with said mould parts open, positioning between said parts generally on said longitudinal axis, a relatively narrow tubular parison of a thermoplastic material in a mouldable condition, said parison including an end portion at which said opening of the article is to be formed;

providing a primary mandrel and a secondary mandrel shaped to form respectively the main opening and a secondary opening disposed adjacent the main opening, said secondary mandrel having an air duct which includes an air outlet disposed at an outer end of the mandrel;

moving said mandrels into said end portion of the parison;

closing the mould parts about said mandrels and closing the end of the parison opposite said one end;

introducing air into the interior of the parison to cause the parison to expand and adopt the shape of the mould cavity, including causing air to flow into the parison by way of said air duct in the secondary mandrel, whereby air flows from said duct into the internal space in the body portion of the article and ensures communication between said secondary opening and said internal space;

allowing the parison to cool at least to a semirigid state in which it can be handled; and

opening the mould parts to permit removal of the moulded article; the method being characterised by laterally stretching said end portion of the parison to an extent sufficient to permit said mandrels to enter said portion; and by radially expanding said end portion and laterally distorting said portion at the position of a secondary axis (Y—Y) along which the secondary mandrel is movable.

According to a second aspect of the invention, there is provided apparatus for blow moulding a plastic article to the type having a hollow body portion with defines an internal space, and a main opening at an end of said portion communicating with said space and extending about an axis communicating with said internal space, the apparatus comprising:

a partible mould comprising mould parts which can be opened and closed and which, when closed, define a mould cavity of a shape appropriate to the required external shape of the article and extending about a longitudinal axis corresponding to said axis of the article, said mould parts and said open position being capable of receiving a relatively narrow tubular parison of a thermoplastic material in a mouldable condition, said parison including an end portion at which said main opening of the article is the formed;

a primary mandrel and a secondary mandrel shaped to form the main opening and secondary opening disposed adjacent the main opening in the article to be moulded, said secondary mandrel having an air duct which includes an air outlet disposed at an outer end of the mandrel, said mandrels being movable between retracted positions clear of said mould parts and advanced positions in which they co-operate with said mould parts for forming said main and secondary openings;

means for closing the end of the parison opposite said one end; and means for introducing air into the interior of the parison to cause the parison to expand and adopt the shape of the mould cavity, said means being adapted to cause air to flow into the parison through said duct in the second mandrel for ensuring communication between said secondary opening and the internal space in the article to be moulded; the apparatus being characterised by means adapted to laterally stretch said end portion of a parison disposed between the mould parts to an extent sufficient to permit the mandrels to enter said end portion, the means comprising a plurality of parison-engaging elements arranged in a generally annular configuration about said longitudinal axis (X—X) of

the mould cavity and disposed generally parallel to said axis (X—X); by means supporting said elements for movement between first and second positions along rectilinear paths being disposed radially with respect to said axis (X—X) and in a plane normal to said axis while maintaining said disposition of the elements generally parallel to said axis, the elements being disposed adjacent said axis in said first positions to permit a parison to be located thereover, and in said second positions are disposed radially outwardly from said first positions to cause the end portion of the parison to expand, and by means for simultaneously moving the elements between said first and second position, said means being adapted to cause at least one of said elements at the position of said secondary axis (Y—Y) to be moved radially outwardly to an extent greater than the remaining elements so that the parison is distorted outwardly to a greater extent at the position of said secondary axis.

In order that the invention may be more clearly understood, reference will now be made to the accompanying drawings which illustrate a preferred embodiment of the invention by way of example, and in which:

Fig. 1 is a perspective view of a "boot" for a power-assisted rack and pinion steering system, manufactured in accordance with the invention;

Fig. 2 is a side elevation, partly in section, of a moulding apparatus according to the invention with the mould parts shown in the open position;

Fig. 3 is a somewhat diagrammatic partial vertical sectional view generally on line III—III of Fig. 2, the section being taken in a plane generally normal to the plane of Fig. 2;

Fig. 4 is a plan view of the stretcher mechanism used for expanding the parison in accordance with the method of the invention; and,

Fig. 5 is a inverted plan view with surrounding structure omitted of two mould inserts which are visible in section in Figs. 2 and 3.

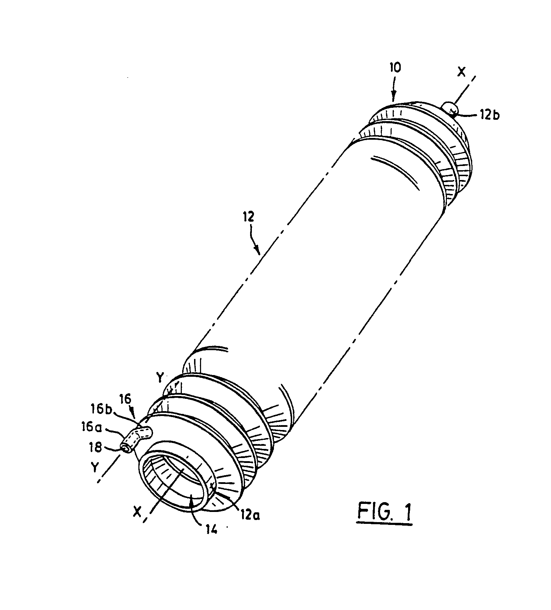

Reference will first be made to Fig. 1 in briefly describing a steering boot as a typical example of a plastic article which may be blow moulded in a single operation in accordance with the method and apparatus provided by the invention. The boot is generally denoted by reference numeral 10 and includes a hollow body portion 12 of corrugated or "bellows" form. The body portion has an internal space and extends about a first axis denoted "X—X". A main opening 14 is provided at one end of the body portion and extends about axis X—X in communication with the internal space of the body portion. Opening 14 is defined by a relatively wide neck 12a at the relevant end of the body portion 12. A corresponding but much smaller neck 12b is provided at the opposite end of the body portion and defines a smaller opening at the other end of the boot.

Formed externally on body portion 12 is an integral nipple 16 which as an internal passageway communicating with the internal space of the body portion and defining a secondary opening 18 adjacent the main opening 14. The internal passageway of nipple 16 has an outer portion 16a which extends about a second axis Y—Y spaced from and generally parallel to the first axis X—X. The passageway also has an inner end portion 16b which is inclined inwardly towards axis X—X and which communicates with the internal space of the body portion.

As has been explained previously, there are two primary problems associated with the manufacture of boot 10 in a single blow moulding operation. Firstly, a relatively small diameter parison must be used in order to successfully mould the corrugations in the body portion of the article, but using such a parison, it is difficult to successfully form and size the relatively wide neck 12a required in this type of article. The second problem is to integrally form nipple 16 with the remainder of the article.

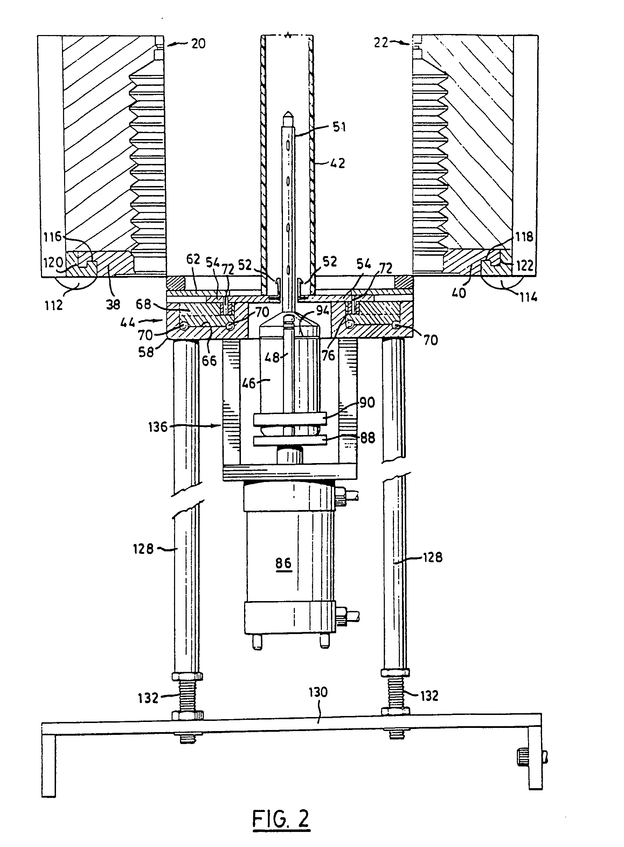

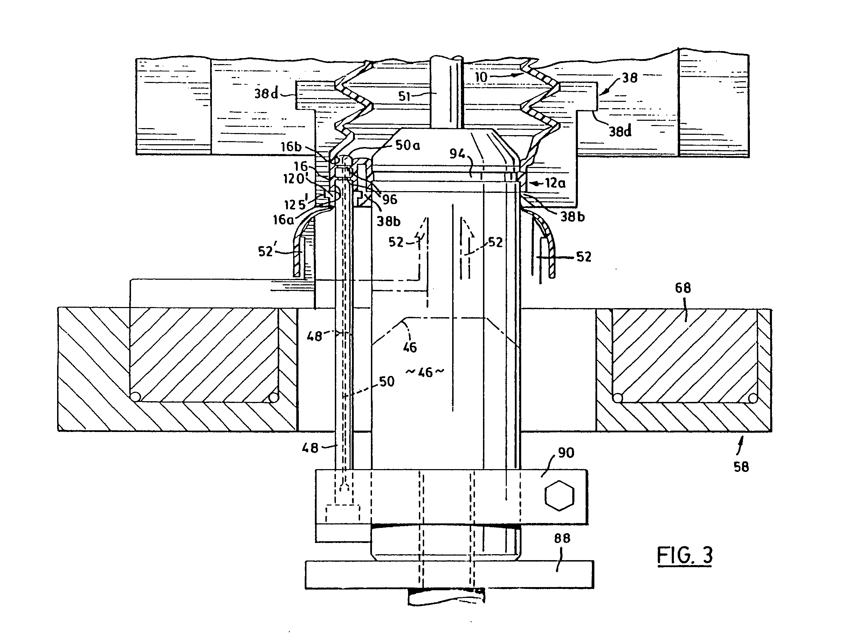

Referring now to Figs. 2 and 3, the blow moulding apparatus used to make boot 10 includes a partible mould comprising first and second mould parts denoted 20 and 22 respectively. In this particular embodiment, each part forms one half of the mould and the mould halves are movable between the open position in which they are shown in Fig. 2 and a closed position. For clarity of illustration, the drawings do not show supports for the mould halves or the means employed to move them between the open and closed positions. These components are entirely conventional and will be well known to persons skilled in the blow moulding art.

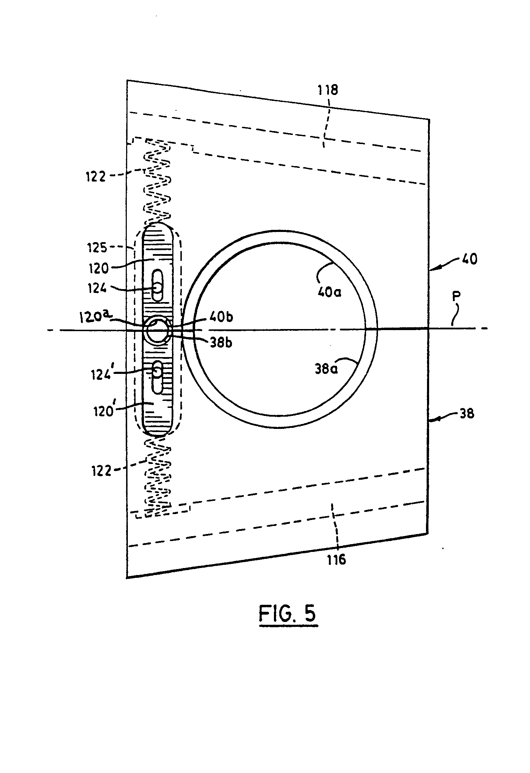

The mould parts are machined to define specially shaped recesses 20a and 22a respectively which co-operate when the mould is closed to define a mould cavity which extends about a longitudinal axis; this axis corresponds with the first axis X—X of the article and is therefore similarly designated. The mould cavity is of a shape appropriate to the required external shape of the article to be moulded, in this case the boot 10. Part of the article is visible in longitudinal section 10 in Fig. 3. The mould parts also include movable mould inserts 38 and 40 which are more particularly illustrated in Fig. 5 and which will be described later in connection with that view.

Referring back to Fig. 2, the boot 10 is moulded from a tubular parison 42 of a thermoplastic material. The parison is shown in the position it occupies immediately before the mould halves 20 and 22 are closed prior to commencement of the actual blow moulding operation. At this time, the parison will be in a mouldable condition; that is, the plastic material of which the parison is made will be hot and in a form in which it can be relatively easily deformed by the application of internal air pressure. Normally, the parison will in fact be formed by a section severed transversely from a tubular extrusion fed continuously or intermittently to the moulding apparatus from an extruder as is conventional in the blow moulding art. In Fig. 2, the parison is shown supported from the extruder.

For the reasons discussed above, parison 42 is of relatively small diameter and in fact has a radial dimension less than the spacing between the axes X—X and Y—Y of the moulded article. The apparatus therefore includes a "stretcher mechanism" for mechanically engaging and expanding the lower end portion of the parison. The mechanism is generally indicated by the reference numeral 44 and will be described in detail later.

Before referring to the stretcher mechanism, however, it will be convenient to identify a mandrel assembly which appears in the center of the stretcher mechanism as seen in Figs. 2 and 3. The mandrel assembly includes a primary mandrel 46 and a secondary mandrel 48. The secondary mandrel appears in front of the primary mandrel in Fig. 2 and the two mandrels can best be seen in Fig. 3. The main mandrel is of relatively large diameter and is designed to define the shape of and accurately size the neck 12a of the article. Mandrel 46 extends about the longitudinal axis X—X of the apparatus. Mandrel 48 is of relatively small diameter and is shaped to form the outer portion 16a of the passageway in the nipple 18 of the moulded article (see Fig. 1). Mandrel 48 has an internal air duct 50 which includes an air outlet 50a at the outer end of the mandrel arranged so that air leaving the outlet will be directed inwardly towards axis X—X and form the inner end portion 16b of the passageway in nipple 16. In other words, the air issuing from outlet 50a will blow through the plastic material which might otherwise tend to obstruct the inner end portion of the passageway so that the passageway is properly formed and will be clear internally.

Air is also introduced into the interior of the parison through a blow pin 51 which expands upwardly from the top of the main mandrel 46. Blow pin 51 is of conventional form and communicates with an air duct (not shown) in mandrel 46. The two air ducts in the respective mandrels are supplied with air from a suitable compressed air supply as is conventional in the art. Blow pin 51 is also visible in Fig. 2 and has a series of openings in its external surface through which air issues into the interior of the parison to expand the same. In that view, the mandrels 46 and 48 are shown in retracted positions such as they would occupy just after the parison 42 had been formed but before the mould parts have been closed and blowing has taken place. In Fig. 3, on the other hand, the mandrels are shown in their elevated positions as during blow moulding. The retracted positions of the upper ends of the respective mandrels are shown in ghost outline. The mechanism for moving the mandrels between their advanced and retracted positions will be described later.

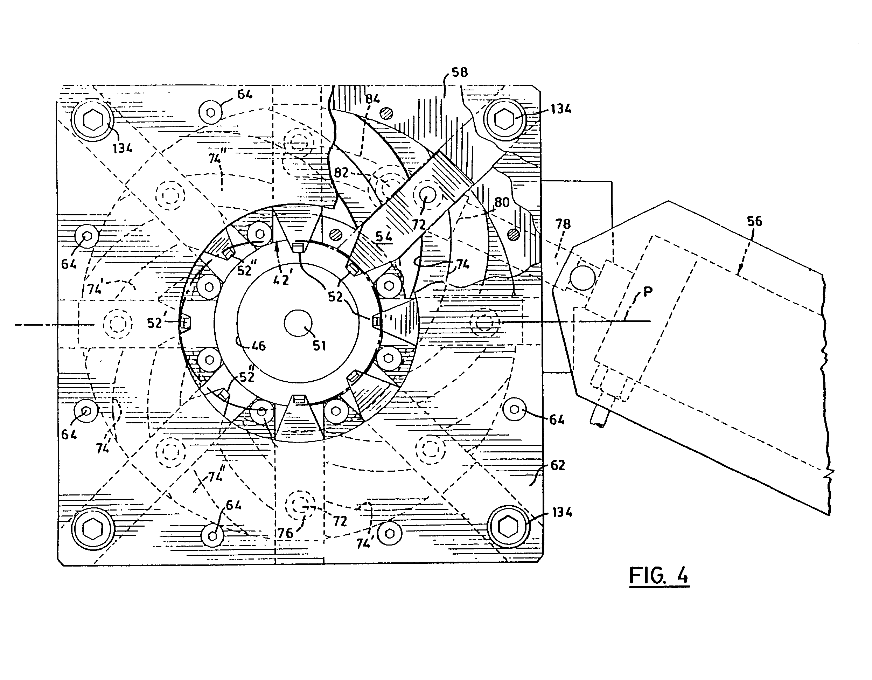

Referring particularly to Figs. 2 and 4, stretcher mechanism 44 includes a plurality of parison engaging "fingers" arranged in an annular series around the mandrel blow pin 51 adjacent the lower end of the mould parts. Two of these fingers are visible at 52 in Fig. 2; however, by reference to Fig. 4, it will be seen that eight such fingers are in fact provided and are spaced equally about the blow pin. Each finger projects upwardly from a horizontally movable slide 54 parallel to the longitudinal axis of mould cavity 24. The slides 54 are movable simultaneously to move the fingers between the normal rest positions in which two of the fingers are shown in Fig. 2, in which the fingers are all disposed closely adjacent to the blow pin 51 (and within the lower end of the parison 42) and retracted positions as shown in Fig. 4, in which the fingers have been moved outwardly to expand the lower end portion of the parison generally to the shape indicated at 42' in Fig. 4.

It will be noted that the fingers 52 move radially with respect to the mould cavity axis X—X at all times. However, the fingers 52 do not all move to the same radial extent. The primary and secondary mandrels are visible in Fig. 4 at 46 and 48 respectively and it will be noted that the finger closest to the secondary mandrel 48 (denoted 52') has moved radially further away from axis X—X than the other fingers and that the fingers on either side of finger 52' (denoted 52'') has moved an intermediate distance so that the parison has been laterally stretched at the position of the secondary mandrel to an extent sufficient to permit that mandrel to enter the end portion of the parison when the mandrel is raised. This lateral stretching of the parison is not of course visible in Fig. 2 because the sectional view represented by Fig. 2 is taken in a plane normal to the plane on which the mould parts meet (denoted P in Fig. 4) and the parison is expanded symmetrically in that plane.

This differential movement between different ones of the fingers 52 is also illustrated in Fig. 3 in which finger 52' is shown in full lines in its retracted (parison expanding) position and in chain-dotted outline in its advanced position; the diametrally opposite finger 52 is similarly illustrated and it can be seen that finger will move over a much smaller radial distance than finger 52'. This differential movement is achieved by providing differently shaped cam tracks for controlling movement of the slides on which the fingers are mounted as will be described below.

Movement of the fingers between their rest positions and retracted (parison expanding) positions is controlled by a pneumatic cylinder and ram device generally denoted 56 and shown in Fig. 4 only. The slides 54 which carry the fingers 52 are mounted in respective radial grooves or slideways 60 in the underside of a cover plate 62 secured by bolts 64 to a housing 58 (see also Fig. 2). As seen in Fig. 4, the slides are substantially in their fully retracted positions.

Below the slides, housing 58 is shaped to define an annular recess 66 (see Fig. 2) which receives an angular member 68 forming an actuator ring for the fingers 52. Ring 68 is mounted for free turning movement in recess 66 by way of ballbearings 70. Each of the slides 54 is fitted with a pin 72 which depends from the slide and is received in an arcuate groove 74 (Fig. 4) in the upper face of the ring 68. A bearing sleeves 76 is fitted around the lower portion of each pin 72 within groove 74. Similar groove and pin arrangements are provided for each of the slides 54. The grooves 74 in effect define cam tracks and are specially shaped so that angular movement of ring 68 causes all of the slides 54 to move radially in or out depending on the direction in which the ring is turned. For example, if ring 68 is turned in the counterclockwise direction as seen in Fig. 4, the cam tracks 74 will all act on the associated bearing sleeve 76 and pins 72 to cause all slides 54 and associated fingers 52 to move inwardly towards the blow pin 58. Conversely, if the fingers 52 are in the rest (advanced) positions adjacent blow pin 51 and ring 68 is turned in the clockwise direction, the fingers will all sumultaneously move outwards. The extent of this movement in either case is determined by the length of the cam tracks 74 and the angular extent through which ring 68 is turned.

The cam track for the slide associated with finger 52' is denoted 74' and is somewhat steeper (less arcuate) than the cam tracks associated with the other fingers so that finger 52' will move radially further outwards than the other fingers. Similarly, the cam track associated with the fingers 52'' are denoted 74'' and are curved slightly more than track 74' but less than the other cam tracks. This differential in curvature between the various tracks makes for corresponding differentials in the radial movement of the associated fingers.

Angular movement of the ring 68 is effected by the cylinder and ram device 56 referred to above. The ram of device 56 is indicated at 78 and has a coupling 80 at its outer end. A link pin 82 extends vertically upwardly from coupling 80 through an arcuate slot 84 in the bottom wall of housing 58 and is secured to ring 68 at its upper end. Thus, as ram 78 is extended and retracted, ring 68 will move through discreet angular amounts. The amount of this angular movement will be determined by the stroke of ram 78, which will be selected as appropriate to the required movement of the fingers 52.

In an alternative embodiment, cylinder and ram device 56 may be replaced by a hydraulic motor arranged with its drive shaft vertical and fitted at its upper end with a gear which meshes with a corresponding ring gear fitted to the underside of ring 68 so that the ring can be turned by operating the motor. Obviously, the motor would have to be suitably geared and would be reversible.

Fig. 2 illustrates how the slides 54 which support the fingers 52 also serve to define the position of the parison 52 prior to commencement of the blow moulding operation. Thus, the parison should be dispersed so that a lower end portion thereof extends beyond the lower ends of the mould parts 20 and 22. In the described illustrated embodiment, this end portion of the parison is engaged by the fingers 52 of the stretcher mechanism 44 and is expanded. However, in an alternative embodiment of the invention, the fingers could engage the parison within the range of movement of the mould parts, in which case the stretcher mechanism would be designed to be retracted downwardly when the mould parts are closed. In any event, the parison should preferably not be expanded beyond its required final size and shape since otherwise there may be a tendency for the parison to become trapped or crimped when the mould parts close.

As discussed previously, expansion and stretching of the lower end portion of the parison by the fingers 52 allows the mandrels 56 and 58 to move upwardly into the parison. This movement is effected by a pneumatic cylinder and ram device 86 (Fig. 2) which is mounted in a vertival position below the mandrel assembly and the ram of which is coupled to said assembly. Thus, the ram is fitted with a transverse plate 88 on which the main mandrel 46 is mounted. A bracket 90 is clamped around mandrel 46 at a position spaced above plate 88 and mandrel 48 is secured to this bracket by a bolt 92 which extends upwardly through a part of the bracket and which is screw-threaded into the lower end of the mandrel. Bolt 92 is formed as a coupling for the air supply to mandrel 48. Blow pin 51 extends upwardly from the top of mandrel 46 as mentioned previously and only part of the pin is visible in Fig. 3. The upper end of the blow pin (see Fig. 2) is shaped to co-operate with the mould parts and close the upper end of the parison when the mandrels are in their raised positions.

At this time, only upper end portions of the two mandrels actually enter the parison. These portions co-operate with the mould inserts 38 and 40 referred to previously and both the mandrels and the inserts are closely dimensioned so that the neck area of the moulded article and the nipple 16 are formed by compression between the inserts and the mandrels rather than by blow moulding as such. In other words, the neck area of the article is in fact compression moulded while the body portion is blown (as is the inner end portion of the passageway in nipple 16).

An annular groove 94 is provided around the upper end portion of mandrel 46 so as to form a corresponding protuberant rib inside the neck of the moulded article. Similar grooves 96 are provided around the upper end portion of mandrel 48 for forming similar ribs inside nipple 16. These ribs assist in properly securing the boot to the steering system components when the article is installed. The mould inserts 38 and 40 are designed to be retractable away from the mandrels to free the neck of the moulded article and allow it to flex sufficiently to permit the mandrel to be withdrawn without damaging the moulded ribs formed by the grooves 94 and 96. The mould parts 20 and 22 are provided with respective parallel sided recesses which receive the inserts and allow them to slide towards and away from one another from their normal moulding positions to retracted positions in which pressure on the moulded article is relieved. Insert 38 is visible in Fig. 3 and it will be seen that the insert is formed with projecting flanges 38d which are received in a complementary undercut portion of the recess in mould half 20 so as to permit this sliding movement of the insert. Insert 40 is similarly supported in mould half 22. The inserts have respective inwardly projecting peripheral edges as edge 38b (Fig. 3) at their lower ends which co-operate with mandrels to cut off the surplus lower end portion of the parison when the mould halves are closed.

Movement of the two inserts between their advanced and retracted positions is effected under the control of respective pneumatic cylinder and ram devices 112 and 114 which are horizontally mounted behind the mould parts and portions of which are visible in Fig. 2. With continued reference to that view, it will be seen that the inserts 38 and 40 are shaped at their outer sides to define respective undercut slideways 116 and 118 which slidable interlock with associated actuator slides. These actuator slides are coupled to the respective cylinder and ram devices 112 and 114. The slides have not been shown in detail but, the two inserts 38 and 40 are shown in plan in Fig. 5; it is sufficient to note that the slides are generally wedge shaped and that the slideways 116 and 118 on the inserts are inclined with respect to the joint line between the two mould halves 20 and 22. Thus, longitudinal movement of the respective slides under the control of their associated cylinder and ram devices 112 and 114 will cause corresponding radial movement of the inserts 38 and 40 with respect to the mould cavity 24.

Referring now to Fig. 5, it will be seen that each of the inserts 38 and 40 has a main arcuate shaped recess for receiving the main mandrel and a smaller similarly shaped recess in which the secondary mandrel is received. The respective recesses in insert 38 are denoted 38a and 38b while the corresponding recesses in insert 40 are denoted 40a and 40b. Insert 40 is provided with a slide 120 which is biased toward recess 40b by a compression spring 122. Slide 120 has an outer edge 120a curved to engage mandrel 48 inwardly of recess 40b and is retained by a pin 124 which extends through a longitudinal slot in the slide so that, when the inserts are apart, the slide can move within the limits allowed by the slot. Slide 120 is of generally T-shaped cross-section and is received in a T-shaped slideway 125, the cross-sectional shape of which can be seen in Fig. 3. A similar spring biased slide, generally denoted 120', is provided in insert 38. The purpose of the spring-biassed slides is to apply a slight retaining force against the nipple on the moulded article as mandrel 48 is withdrawn so as to minimize the risk of distorting the nipple.

The apparatus provided by the invention is supported by four support columns, two of which are visible at 128 in Fig. 2, and which extend upwardly from a base plate 130; the columns are provided with screw adjusters 132 at their lower ends. At their upper ends, the four support columns are attached to the actuator housing 58 by four bolts 134 (Fig. 4). The device 96 for actuating the mandrel assembly is carried by brackets 136 depending from housing 58.

A typical moulding sequence will now be described primarily with reference to Figs. 2 and 3.

With the mould halves 20 and 22 in their open positions and mandrel assembly retracted, the parison 42 is positioned over the exposed portion of the mandrel blow pin 51. Typically, the parison will be extruded into this position and supported at its upper end by the extrusion device. At this time, the cylinder and ram devices 112 and 114 associated with the mould inserts 38 and 40 will be actuated so that the inserts will be in their forward (moulding) positions and the fingers 52 will be in their normal rest positions adjacent blow pin 51. After the parison has reached the position shown in Fig. 2, the fingers 52 will be moved outwardly by actuating cylinder and ram device 56 to expand and stretch the lower end portion of the parison. Next, the mandrels 46 and 48 will move up into the position in which they are shown in Fig. 3 inside the parison. The mould halves then close onto the mandrels, trapping the parison.

Air pressure is now introduced into the parison through the mandrel blow pin 51 and through mandrel 48. This expands the parison into contact with the mould halves and causes it to conform to the shape of the mould cavity. At the same time, the inner end portion 16b of the passageway in nipple 16 is formed. The parison then cools into a relatively rigid state. Air pressure is then released and the rams of the cylinder and ram devices 112 and 114 are retracted to retract the mould inserts 38 and 40 and relieve external pressure on the neck of the moulded article.

Next, the mandrels are retracted and the mould halves open leaving the moulded article supported by the fingers 52 and slides 54. Finally, the moulded article is removed either manually or by an air cylinder actuated "wiper" mechanism in manner known per se. The inserts 38 and 40 are then returned to their forward position ready for the next operation.

It is to be noted that the method and apparatus disclosed herein may be used for moulding articles other than the article specifically referred to above. According to another aspect, the method and apparatus of the invention may be used to manufacture an article in which the secondary opening is not disposed about an axis parallel to the axis of the main opening of the article; in other words, referring to Fig. 1 of the drawings, axis Y—Y need not be parallel to axis X—X. For example, nipple 16 could extend about an axis disposed at an angle to axis X—X (e.g. a 45° angle). In that event, the secondary mandrel would have to be provided with a separate actuating device; in other words, the two mandrels could not be actuated by the same cylinder and ram device in the manner shown in the drawings.

There is no limitation to articles of circular cross-section although special arrangements will obviously have to be provided for stretching the parison where the article is to be of non-circular shape.

The movable inserts 38 and 40 although desirable in the present invention, are not essential. For example, there would be no need for such inserts if the neck of the moulded article were plain.

Also, it may not be necessary to expand the inner end portion of the parison radially in all cases. Depending on the article, in some cases, it might be sufficient merely to stretch the parison to receive the secondary mandrel. The fingers around the remainder of the parison would then remain stationary and simply hold the parison in place or those fingers might even be omitted in some cases.

## Claims

1. A method of blow moulding a plastic article having a hollow body portion which defines an internal space, and a main opening at an end of said portion communicating with said space and extending about an axis, communicating with said internal space, the method comprising the steps of:

providing a partible mould comprising mould parts which can be opened and closed and which, when closed, define a mould cavity of a shape appropriate to the required external shape of the article and extending about a longitudinal axis corresponding to said axis of the article;

with said mould parts open, positioning between said parts generally on said longitudinal axis, a relatively narrow tubular parison of a thermoplastic material in a mouldable condition, said parison including an end portion at which said opening of the article is to be formed;

providing a primary mandrel and a secondary mandrel shaped to form respectively the main opening and a secondary opening disposed adjacent the main opening, said secondary mandrel having an air duct which includes an air outlet disposed at an outer end of the mandrel;

moving said mandrels into said end portions of the parison;

closing the mould parts about said mandrels and closing the end of the parison opposite said one end;

introducing air into the interior of the parison to cause the parison to expand and adopt the shape of the mould cavity, including causing air to flow into the parison by way of said air duct in the secondary mandrel, whereby air flows from said duct into the internal space in the body portion of the article and ensures communication between said secondary opening and said internal space;

allowing the parison to cool at least to a semirigid state in which it can be handled; and

opening the mould parts to permit removal of the moulded article; the method being characterised by laterally stretching said end portion (42a) of the parison (42) to an extent sufficient to permit said mandrels to enter said portion, said lateral stretching including both radially expanding said end portion and laterally distorting said portion (42a) at the position of a secondary axis (Y—Y) along which the secondary mandrel (48) is movable.

2. A method as claimed in Claim 1, characterised in that said step of laterally stretching the end portion (42a) of the parison (42) is performed by providing a plurality of parison-engaging elements (52) which are arranged in a generally annular configuration about said longitudinal axis (X—X) of the mould cavity and which project into said end portion (42a) of the parison generally parallel to said axis (X—X), and simultaneously moving all of said elements (52) radially outwardly with respect to said axis (X—X) along rectilinear paths which extend normal to said axis while maintaining the elements (52) generally parallel to said axis and leaving said end of the parison unobstructed, at least one of said elements (52') at the position of said secondary axis (Y—Y) being moved through a radial distance greater than the remainder of said elements (52, 52'') so as to cause said lateral distortion of the shape of the parison.

3. A method as claimed in Claim 1, characterised in that said mould parts (20, 22) include respective inserts (38, 40) defining surface portions of said mould cavity for defining the external shape of the article in the region of said main opening (12) and passageway, and in that each said mandrel (46, 48) defines at least one external annular groove (94, 96) for forming an inwardly protuberant rib in the respective opening in the moulded article, and where the method is further characterised by

withdrawing said mandrels (46, 48) from the parison after the parison has been expanded by air pressure, and

relieving the pressure between said inserts (38, 40) and the mandrels after the parison has been expanded but before withdrawing the mandrels, to permit the moulded article to flex and allow disengagement of the moulded ribs from said grooves (94, 96) in the mandrels as the mandrels are withdrawn.

4. A method as claimed in Claim 3, characterised by the further step of mechanically restraining the portion of the moulded article in which said passageway (16) is formed as the secondary mandrel is withdrawn.

5. Apparatus for blow moulding a plastic article of the type having a hollow body portion with defines an internal space, and a main opening at an end of said portion communicating with said space and extending about an axis communicating with said internal space, the apparatus comprising:

a partible mould comprising mould parts which can be opened and closed and which, when closed, define a mould cavity of a shape appropriate to the required external shape of the article and extending about a longitudinal axis corresponding to said axis of the article, said mould parts and said open position being capable of receiving a relatively narrow tubular parison of a thermoplastic material in a mouldable condition, said parison including an end portion at which said main opening of the article is to be formed;

a primary mandrel and a secondary mandrel shaped to form the main opening and secondary opening disposed adjacent the main opening in the article to be moulded, said secondary mandrel having an air duct which includes an air outlet disposed at an outer end of the mandrel, said mandrels being movable between retracted positions clear of said mould parts and advanced positions in which they co-operate with said mould parts of forming said main and secondary openings;

means for closing the end of the parison opposite said one end; and means for introducing air into the interior of the parison to cause the parison to expand and adopt the shape of the mould cavity, said means being adapted to cause air to flow into the parison through said duct in the secondary mandrel for ensuring communication between said secondary opening and the internal space in the article to be moulded; the apparatus being characterised by means (52) adapted to laterally stretch said end portion (42a) of a parison (42) disposed between the mould parts to an extent sufficient to permit the mandrels (46, 48) to enter said end portion (42a) the means comprising a plurality of parison-engaging elements (52) arranged in a generally annular configuration about said longitudinal axis (X—X) of the mould cavity and disposed generally parallel to said axis (X—X); by means (54) supporting said elements (52) for movement between first and second positions along rectilinear paths being disposed radially with respect to said axis (X—X) and in a plane normal to said axis while maintaining said disposition of the elements (52) generally parallel to said axis, the elements being disposed adjacent said axis in said first positions to permit a parison to be located thereover, and in said second positions are displaced radially outwardly from said first positions to cause the end portion of the parison to expand, and by means (56) for simultaneously moving the elements between said first and second position, said means (56) being adapted to cause at least one of said elements (52') at the position of said secondary axis (Y—Y) to be moved radially outwardly to an extent greater than the remaining elements (52, 52'') so that the parison (42) is distorted outwardly to a greater extent at the position of said secondary axis.

6. Apparatus as claimed in Claim 5, characterised in that said support means includes: a plurality of slide members (56) corresponding to said plurality of parison engaging elements (52), each member (54) supporting one of said elements (52) at an inner end thereof with the element projecting upwardly from the member generally normal therefrom; in that an annular housing (58) defines a central opening (66) for permitting movement of said mandrels therethrough between their retracted positions and their advanced positions, said housing (58) supporting said slide members (54) for horizontal sliding movement radially of the housing between said first and second positions; in that said means for moving the elements between said positions comprise an actuator ring (68) supported by said housing for turning movement about an axis of said central opening defined by the housing; in that there is actuator means (56) for turning said ring through a predetermined angular amount; and in that there is cam means (74) coupling said actuator ring (68) and said slide members (54) and arranged to cause longitudinal sliding movement of the members in response to turning the ring, said cam means (74) being shaped to provide for said different movement of the sliding members to cause said distortion of the parison.

7. Apparatus as claimed in Claim 6, further characterised by a plurality of mould inserts (38, 40) carried each by one of said mould parts (20, 22) and defining surface portions of said mould cavity for forming the exterior of the articles in the region of said main and secondary openings, each said insert (38, 40) being movable between a forward normal moulding position for co-operation with said mandrels (46, 48), and retracted position for relieving pressure between said mould parts and said mandrels; and by means (112, 114) for moving the inserts between their moulding positions and retracted positions.

8. Apparatus as claimed in Claim 7, characterised in that one of said inserts (38, 40) includes a spring-based slide member (120) arranged to be resiliently urged against the external surface of the moulded article in the region of said outer portion of the passageway therein so as to apply a restraining force to said region during withdrawal of the second mandrel (38) from the outer portion of said passageway.

## Patentansprüche

1. Verfahren zum Blasformen eines Kunststoffgegenstandes mit einem einen Innenruam begrenzenden Hohlkörperabschnitt und einer Hauptöffnung an einem Ende dieses Abschnittes, die mit dem Innenraum in Verbindung steht sowie sich um eine Achse erstreckt, die mit dem Innenraum in Verbindung steht, bestehend aus folgenden Schritten:

Bereitstellen einer teilberen Form, welche Formteile aufweist, die geöffnet und geschlossen werden können und die im geschlossenen Zustand einen Formhohlraum mit einer Gestalt begrenzen, die der erforderlichen äußeren Gestalt des Gegenstandes entspricht und sich um eine der Achse des Gegenstandes entsprechenden Längsachse erstreckt,

Anordnen eines verhältnismäßig schmalen rohrförmigen Kübels aus thermoplastischem Kunststoff in formbarem Zustand zwischen den geöffneten Formteilen im wesentlichen an der Längsachse, wobei der Külbel einen Endbereich aufweist, an dem die Öffnung des Gegenstandes auszubilden ist,

Bereitstellen eines Hauptdornes und eines Nebendornes, die jeweils zur Formung der Hauptöffnung bzw. einer der Hauptöffnung benachbart angeordneten Nebenöffnung gestaltet sind, wobei der Nebendorn eine Luftleitung mit einem an einem äußeren Dornende angeordneten Luftauslaß aufweist, Bewegen der Dorne in den Endbereich des Külbels,

Schließen der Formteile um die Dorne und Verschließen des dem genannten Ende gegenüberliegenden Külbelendes, Einleiten von Luft ins Innere des Külbels, um den Külbel aufzuweiten und ihm die Gestalt des Formhohlraumes zu verleihen wobei in den Külbel Luft durch die Luftleitung im Nebendorn eingeleiter wird, wodurch die Luft aus der Leitung in den Innenraum im Körperabschnitt des Gegenstandes strömt und die Verbindung zwischen der Nebenöffnung und dem Innenraum sichert,

Abkühlenlassen des Külbels in einen zumindest halbstarren Zustand, in dem er handhabbar ist,

Öffnen der Formteile zur Entnahme des geformten Gegenstandes,

gekennzeichnet durch seitliches Recken des Endbereiches (42a) des Külbels (42) und ein zum Eintreten der Dorne in diesen Bereich ausreichendes Ausmaß, wobei das seitliche Recken sowohl radiales Aufweiten des Endbereiches als auch seitliches Verformen des Bereiches (42a) an der Stelle einer Nebenachse (Y—Y) umfaßt, entlang der der Nebendorn (48) bewegbar ist.

2. Verfahren nach Anspruch 1, dadurch gekennzeichnet, daß der Schritt des seitlichen Reckens des Endbereiches (52a) des Külbels (42) durch Bereitstellen mehrerer am Külbel angreifender Elemente (52) durchgeführt wird, die in im wesentlichen ringförmiger Anordnung um die Längsachse (X—X) des Formhohlraumes angeordnet sind und in den Endbereich (42a) des Külbels in wesentlichen parallel zu dieser Achse (X—X) vorspringen, und daß alle Elemente (52) gleichzeitig bezüglich dieser Achse (X—X) entlang senkrecht zu diewer Achse varlaufender geradliniger Wege radial nach außen bewegt werden, während die Elemente (52) im wesentlichen parallel zu dieser Achse und von dem genannten Külbelende fern gehalten werden, wobei zumindest eines der Elemente (52') an der Stelle der Nebenachse (Y—Y) un einen radialen Abstand bewegt wird, der größer ist als der der übrigen Elemente (52, 52''), um die seitliche Verformung der Külbelgestalt zu bewirken.

3. Verfahren nach Anspruch 1, dadurch gekennzeichnet, daß die Formteile (20, 22) jeweils Einsätze (38, 40) aufweisen, die Oberflächenabschnitte des Formhohlraumes zur Formung der äußeren Gestalt des Gegenstandes im Bereich der Hauptöffnung (12) und eines Durchlasses begrenzen, und daß jeder Dorn (46, 48) zumindest eine außenliegende Ringnut (94, 96) zur Formung einer einwärts vorspringenden Rippe in der betreffenden Öffnung des geformten Gegenstandes begrenzt, und weiters gekennzeichnet durch

Ausziehen der Dorne (46, 48) aus dem Külbel nach dessen Aufweiten mittels Luftdruck, und

Druckentlasting zwischen den Einsätzen (38, 40) und den Dornen nach dem Aufweiten des Külbels, jedoch vor Ausziehen der Dorne, un ein Verbiegen des geformten Gegenstandes und Lösen der geformten Rippen aus den Nuten (94, 96) der Dorne bei deren Ausziehen zu ermöglichen.

4. Verfahren nach Anspruch 3, gekennzeichnet durch den weiteren Schritt des mechanischen Festhaltens desjenigen Bereiches des geformten Gegenstandes, in dem der Durchlaß (16) ausgebildet ist, bei Ausziehen des Nebendornes.

5. Vorrichtung zum Blasformen eines Kunststoffgegenstandes der Art mit einem einen Innenraum begrenzenden Hohlkörperabschnitt und einer Hauptöffnung an einem Ende dieses Abschnittes, die mit dem Innenraum in Verbindung steht sowie sich um eine Achse erstreckt, die mit dem Innenraum in Verbindung steht, bestehend aus:

einer teilbaren Form, welche Formteile aufweist, die geöffnet und geschlossen werden können und die im geschlossenen Zustand einen Formhohlraum mit einer Gestalt begrenzen, die der erforderlichen äußeren Gestalt des Gegenstandes entspricht und sich um eine der Achse des Gegenstandes entsprechenden Längsachse erstreckt, wobei die Formteile im geöffneten Zustand zur Aufnahme eines verhältnismäßig schmalen rohrförmigen Külbels aus thermoplastichem Kunststoff in formbarem Zustand ausgebildet sind, wobei der Külbel einen Endbereich aufweist, an dem die Öffnung des Gegenstandes auszubilden ist,

einem Hauptdorn und einem Nabendorn, die jeweils zur Formung der Hauptöffnung bzw. einer der Hauptöffnung benachbart angeordneten Nebenöffnung gestaltet sind, wobei der Nabendorn eine Luftleitung mit einem an einem äußeren Dornende angeordneten Luftauslaß aufweist, welche Dorne zwischen einer von den Formteilen zurückgezogenen Stellung und einer vorgeschobenen Stellung bewegbar sind, in der sie mit den Formteilen zur Bildung der Haupt- und Nebenöffnung zusammenwirken,

einer Einrichtung zum Verschließen des dem genannten Ende gegenüberliegenden Külbelendes, und einer Einrichtung zum Einleiten von Luft ins Innere des Külbels, um den Külbel aufzuweiten und ihm die Gestalt des Formhohlraumes zu verliehen, wobei die Einrichtung zum Einleiten von Luft in den Külbel durch die Luftleitung im Nebendorn zur Sicherung der Verbindung zwischen der Nebenöffnung und dem Innenraum des zu formenden Gegenstandes ausgebildet ist, gekennzeichnet durch eine Einrichtung (52), die zum seitlichen Recken des Endbereiches (42a) des zwischen den Formteilen angeordneten Külbels (42) um ein zum Eintreten der Dorne (46, 48) in diesen Bereich (42a) ausreichendes Ausmaß ausgebildet ist und aus mehreren am Külbel angreifenden Elemente (52) besteht, die in im wesentlichen ringförmiger Anordnung um die Längsachse (X—X) des Formhohlraumes und im wesentlichen parallel zu dieser Achse (X—X) angeordnet sind, und durch eine Einrichtung (54) zur Abstützung dieser Elemente (52) zur Bewegung zwischen einer ersten une einer zweiten Stellung entlang zu dieser Achse (X—X) und in einer senkrecht zu dieser Achse verlaufender geradliniger Wege, während die Anordnung der Elemente (52) im wesentlichen parallel zu dieser Achse gehalten werden, wobei die Elemente nahe dieser Achse in einer ersten Stellung angeordnet sind, um den Külbel darüber anordnen zu können, und in der zweiten Stellung radial außerhalb der ersten Stellung verlagert sind, um den Enbereich des Külbels aufzuweiten, und durch eine Einrichtung (56) zur gleichzeitigen Bewegung der Elemente zwischen der ersten und zweiten Stellung, wobei die Einrichtung (56) zur Bewegung zumindest eines der Elemente (52') an der Stelle der Nebenachse (Y—Y) radial nach außen un ein Ausmaß, das größer ist als das der übrigen Elemente (52, 52''), sodaß der Kübel (42) an der Stelle der Nebenachse um ein größeres Ausmaß nach außen verformt wird.

6. Vorrichtung nach Anspruch 5, dadurch gekennzeichnet, daß die Stützeinrichtung eine der Anzahl der am Külbel angreifenden Elemente (52) entsprechende Anzahl Gleitstücke (56) aufweist, von jeden jedes Gleitstück (54) eines der Elemente (52) an seinem innenliegenden Ende abstützt, wobei das Element von dem Gleitstück aufwärts im wesentlichen senkrecht vorspringt, daß ein ringförmiges Gehäuse (58) eine zentrale Öffnung (66) zum Durchschieben der Dorne zwischen ihrer zurückgezogenen und ihrer vorgeschobenen Stellung begrenzt und das die Gleitstücke (54) zur horizontalen, bezüglich des Gehäuses radialen Bewegung zwischen einer ersten und einer zweiten Stellung trägt, daß die Einrichtung zum Bewegen der Elemente zwischen diesen Stellungen einen Betätigungsring (68) aufweist, der von dem Gehäuse für eine Drehbewegung um eine Achse der von dem Gehäuse begrenzten zentralen Öffnung getragen ist, daß eine Betätigungseinrichtung (56) zum Verdrehen des Ringes über einen vorbestimmten Winkelbetrag vorgesehen ist, und daß eine Nockeneinrichtung (74) vorgesehen ist, über die der Betätigungsring (68) mit den Gleitstücken (54) gekuppelt ist und die zur gleitenden Längsbewegung der Gleitstücke in Abhängigkeit von der Verdrehung des Ringes ausgebildet ist und die zur Schaffung der unterschiedlichen Bewegung der Gleitstücke zur Bewirkung der Verformung des Külbels ausgestaltet ist.

7. Vorrichtung nach Anspruch 6, weiters gekennzeichnet durch mehrere jeweils von einem der Formteile (20, 22) getragen Formeinsätze (38, 40), die Oberflächenabschnitte des Formhohlraumes zur Formung der Außenseite des Gegenstandes im Bereich der Haupt- und der Nebenöffnung begrenzen, wobei jeder Einsatz (38, 40) zwischen einer vorderen Normalstellung zum Zusammenwirken mit den Dornen (46, 48) und einer zurückgezogenen Stellung zur Druckenlastung zwischen den Formteilen und den Dornen bewegbar ist, und durch eine Einrichtung (112, 114) zur Bewegung der Einsätze zwischen ihrer Formstellung und ihrer zurückgezogenen Stellung.

8. Vorrichtung nach Anspruch 7, dadurch gekennzeichnet, daß einer der Einsätze (38, 40) ein mit einer Feder vorgespanntes Gleitsück (120) aufweist, das zum elastischen Andrücken an die Außenseite des geformten Gegenstandes im Bereich der Außenseite seines Durchlasses ausgebildet ist, um während des Ausziehens des Nebendornes (38) aus dem Außenbereich des Durchlasses eine Rückhaltekraft auf diesen Bereich auszuüben.

**Revendications**

1. Un procédé pour le moulage par soufflage d'un objet en plastique comportant une partie de corps creux qui délimite un espace intérieur, et une ouverture principale à une extrémité de ladite partie, en communication avec ledit espace intérieur et se prolongeant suivant un axe, le procédé comportant les étapes qui consistent:

à prévoir un moule séparable comprenant des parties de moule qui peuvent être ouvertes et fermées et qui lorsqu'elles sont fermées, délimitent une cavité de moule d'une forme adaptée à la forme extérieure désirée pour l'objet et s'étendent suivant un axe longitudinal correspondant audit axe de l'objet;

lesdites parties de moule étant ouvertes, à positionner entre lesdites parties, dans l'ensemble sur ledit axe longitudinal, une paraison tubulaire relativement étroite d'un matériau thermoplastique dans une condition permettant son moulage, ladite paraison comportant une partie e'extrémité où ladite ouverture de l'objet doit être formée;

à prévoir un mandrin primaire et un mandrin secondaire ayant une forme permettant der former respectivement l'ouverture principale et une ouverture secondaire disposée adjacente à l'ouverture principale, ledit mandrin secondaire comportant un conduit d'air qui comprend une sortie disposée à une extrémité extérieure du mandrin;

à déplacer lesdits mandrins jusque dans ladite partie d'extrémité de la paraison;

à fermer les parties de moule autour desdits mandrins et à fermer l'extrémité de la paraison opposée à ladite extrémité;

à introduire de l'air à l'intérieur de la paraison pour faire subir à celle-ci une expansion et lui faire adopter la forme de la cavité de moule, en amenant aussi l'air à s'écouler jusque dans la paraison à travers ledit conduit d'air dans le mandrin secondaire, grâce à quoi l'air circule depuis ledit conduit dans l'espace intérieur de la partie de corps de l'objet et assure une communication entre ladite ouverture secondaire et ledit espace intérieur;

à laisser se refroidir la paraison au moins jusqu'à un état semi-rigide dans lequel elle peut être manipulée; et

à ouvrir les parties du moule pour permettre d'enlever l'objet moulé; le procédé étant caractérisé par un étirage latéral de ladite partie d'extrémité (42a) de la paraison (42) jusqu'à une limite suffisante pour permettre auxdits mandrins de pénétrer dans ladite partie, ledit étirage latéral comprenant à la fois une expansion radiale de ladite partie d'extrémité (42a) et la déformation latérale de celle-ci à l'endroit de l'axe secondaire (Y—Y) le long duquel le mandrin secondaire (48) peut se déplacer.

2. Procédé selon la revendication 1, caractérisé en ce que ladite étape qui consiste à étirer latéralement la partie d'extrémité (42a) de la paraison (42) est réalisée en prévoyant une pluralité d'éléments (52) de préhension de la paraison, qui sont disposés suivant une configuration annulaire dans l'ensemble autour dudit axe longitudinal (X—X) de la cavité du moule et qui sont en saillie à l'intérieur de ladite partie d'extrémité (42a) de la paraison parallèle dans son ensemble audit axe (X—X), à déplacer simultanément tous ces dits éléments (52) dans une direction radiale vers l'extérieur par rapport audit axe (X—X) le long de trajets rectilignes qui s'étendent dans une direction normale audit axe tout en maintenant les éléments (52) parallèles dans l'ensemble audit axe et à laisser ladite extrémité de la paraison non obstruée, au moins un desdits éléments (52') situé à l'endroit dudit axe secondaire (Y—Y) étant déplacé d'une distance radiale supérieure au reste desdits éléments (52, 52'') de manière à produire ladite déformation latérale de la forme de la paraison.

3. Procédé selon la revendication 1, caractérisé en ce que lesdites parties de moule (20, 22) comportent des pièces rapportées respectives (38, 40) délimitant des parties de surface de ladite cavité de moule pour définir le profil extérieur de l'objet dans la région de ladite ouverture principale (12) et du passage, et en ce que chacun desdits mandrins (46, 48) présente au moins une gorge annulaire extérieure (94, 96) pour former une collerette annulaire en saillie vers l'intérieur dans l'ouverture correspondante de l'objet moulé, le procédé étant caractérisé en outre par le retrait desdits mandrins (46, 48) de la paraison après que celle-ci a subi une expansion sous l'action d'air sous pression et par la diminution de la pression entre lesdites pièces rapportées (38, 40) et les mandrins après que la paraison a subi une expansion mais avant le retrait des mandrins, pour permettre à l'objet moulé de fléchir pour dégager les collerettes moulées hors desdites gorges (94, 96) dans les mandrins, lorsque ceux-ci sont rétractés.

4. Procédé selon la revendication 3, caractérisé par l'étape ultérieure qui consiste à restreindre mécaniquement la partie de l'objet moulé dans laquelle ledit passage (16) est formé alors que le deuxième mandrin est rétracté.

5. Appareil pour le moulage par soufflage d'un objet en matière plastique du type comportant une partie de corps creux qui délimite un espace intérieur, et une ouverture principale à une extrémité de ladite partie, en communication avec ledit espace intérieur et se prolongement suivant un axe, l'appareil comprenant:

un moule séparable comprenant des parties de moule que l'on peut ouvrir ou fermer et qui, lorsqu'elles sont fermées délimitent une cavité de moule d'une forme appropriée à la forme extérieure désirée de l'objet et se prolongeant suivant un axe longitudinal correspondant audit axe de l'objet, lesdites parties de moule, dans ladite position ouverte, étant en mesure de recevoir une paraison tubulaire relativement étroite en un matériau thermoplastique en condition permettant son moulage, ladite paraison comprenant une partie d'extrémité dans laquelle ladite ouverture principale de l'objet doit être formée;

un mandrin primaire et un mandrin secondaire de profils permettant de former l'ouverture principale et l'ouverture secondaire disposée adjacente à l'ouverture principale dans l'objet à mouler, ledit mandrin secondaire comportant un conduit d'air comprenant une sortie disposée à une extrémité extérieure du mandrin, lesdits mandrins pouvant être mobiles entre des positions rétractées éloignées desdites parties de moule et des positions avancées dans laquelle ils coopèrent avec lesdites parties de moule former lesdites ouvertures primaire et secondaire;

des moyens fermer l'extrémité de la paraison opposée à ladite extrémité; et des moyens pour introduire de l'air à l'intérieur de la paraison pour faire subir à celle-ci une expansion et lui faire adopter la forme de la cavité du moule, lesdits moyens étant adaptés à faire s'écouler l'air jusqu'à l'intérieur de la paraison à travers ledit conduit du mandrin secondaire afin d'assurer une communication entre ladite ouverture secondaire et l'espace intérieur de l'objet à mouler; l'appareil étant caractérisé par des moyens (52) adaptés à étirer latéralement ladite partie d'extrémité (42a) de la paraison (42) disposées entre les parties de moule jusqu'à une limite suffisante pour permettre aux mandrins (46, 48) de pénetrer dans ladite partie d'extrémité (42a), ces moyens comprenant une pluralité d'éléments (52) de préhension de la paraison disposés suivant une configuration annulaire dans l'ensemble autour dudit axe longitudinal (X—X) de la cavité du moule et parallèles dans leur ensemble audit axe (X—X); par des moyens (54) supportant lesdits éléments (52) en vue de leur déplacement entre une première et une deuxième positions le long de trajets rectilignes et disposés dans une direction radiale par rapport audit axe (X—X) et dans un plan normal audit axe tout en maintenant ladite disposition des éléments (52) parallèles dans leur ensemble audit axe, les éléments étant disposés adjacents audit axe dans lesdits premières positions pour permettre de placer une paraison au-dessus de ceux-ci, et, dans lesdites deuxièmes positions, étant déplacés radialement vers l'extérieur à partir desdites premières positions pour produire l'expansion de la partie d'extrémité de la paraison, et par des moyens (56) pour déplacer simultanément les éléments entre lesdites première et deuxième positions, lesdits moyens (56) étant adaptés à amener, au moins un desdits éléments (52') situé à l'endroit dudit axe secondaire (Y—Y) à se déplacer radialement vers l'extérieur, jusqu'à une distance supérieure aux éléments restant (52, 52'') de sorte que la paraison (42) es déformée davantage vers l'extérieur à l'endroit dudit axe secondaire.

6. Appareil suivant la revendication 5, caractérisé en ce que lesdits moyens de support comportent: une pluralité d'organes de coulissement (56) correspondant à ladite pluralité d'éléments (52) de préhension de la paraison, chaque moyen de support (54) portant un desdits éléments (52) à une de ses extrémités intérieures, l'élément étant en saillie vers le haut à partir dudit moyen et perpendiculaire dans son ensemble à celui-ci; en ce que un carter annulaire (58) délimite une ouverture centrale (66) pour permettre le déplacement desdits mandrins à travers cette ouverture, entre leur position rétractée et leur position avancée, ledit carter (58) supportant lesdits organes de coulissement (56), en vue d'un déplacement à coulissement horizontal dans une direction radiale du carter entre lesdites première et deuxième positions; en ce que lesdits moyens pour déplacer les éléments entre lesdites positions comportent une bague d'actionnement (68) supportée par ledit carter en vue d'un mouvement de rotation autour d'un de ladite ouverture centrale définé par le carter; en ce qu'il est prévu des moyens d'actionnement (56) pour déplacer en rotation ladite bague, suivant un angle prédéterminé; et en ce que des cames (74) établissent un couplage entre ladite bague d'actionnement (68) et lesdits organes de coulissement (54) et sont agencées pour produire un déplacement en glissement longitudinal des éléments en réponse à la rotation de la bague, lesdites cames (74) étant conformées pour produire lesdits déplacements différents des organes de coulissement afin de produire ladite déformation de la paraison.

7. Appareil selon la revendication 6, caractérisé en outre par une pluralité de pièces rapportées (38, 40) de moule, portées chacune par une desdites parties de moule (20, 22) et définissant des parties de surface de ladite cavité de moule pour former l'extérieur des objets dans la région desdites ouvertures principale et secondaire, chacune desdites pièces rapportées (38, 40) pouvant être déplacée entre une position de moulage normale situé vers l'avant pour coopérer avec lesdits mandrins (46, 48) et une position rétractée pour diminuer la pression entre lesdites parties de moule et lesdites mandrins; et par des moyens (112, 114) pour déplacer les pièces rapportées entre leur position de moulage et leur position rétractée.

8. Appareil selon la revendication 7, caractérisé en ce que l'une desdites pièces rapportées (38, 40) comporte un organe coulissant (120) poussé par un ressort, disposé pour être poussé de façon élastique contre la surface extérieure de l'objet moulé dans la région de ladite partie extérieure du passage qui y est aménagé, de manière à appliquer un effort de contrainte à ladite région, au cours du retrait du mandrin secondaire (38) depuis la partie extérieure dudit passage.

FIG. 1

FIG. 2

FIG. 3

FIG. 4

FIG. 5